# FASCICULE DE BREVET EUROPEEN

(11) **EP 1 157 575 B1**
(45) Date de publication et mention de la délivrance du brevet: **14.04.2010**
(21) Numéro de dépôt: 00905142.6
(22) Date de dépôt: 15.02.2000
(51) Int. Cl.: H04W 12/06

(54) **AUTHENTIFICATION DANS UN RESEAU DE RADIOTELEPHONIE**
AUTHENTIFIZIERUNGSVERFAHREN IN EINEM FUNKNETZ
AUTHENTICATION IN A RADIOTELEPHONE NETWORK

(30) Priorité: 22.02.1999 FR 9902276
(43) Date de publication de la demande: 28.11.2001
(73) Titulaire: Gemalto SA, 92190 Meudon (FR)
(72) Inventeur: GIRAUD, Jean-Luc, F-13400 Aubagne (FR); BOULET, Nathalie, F-13112 La Destrousse (FR)
(86) Numéro de dépôt international: PCT/FR2000/000376
(87) Numéro de publication internationale: WO 2000/051386

(56) Documents cités:
- EP-A- 0 447 380
- EP-A- 0 506 637
- EP-A- 0 651 533
- WO-A-98/26538
- YI-BING LIN ET AL: "Adaptive algorithms for reducing PCS network authentication traffic" IEEE TRANSACTIONS ON VEHICULAR TECHNOLOGY, AUG. 1997, IEEE, USA, vol. 46, no. 3, pages 588-596, XP002123166 ISSN: 0018-9545

## Description

La présente invention concerne un procédé d'authentification entre un terminal radiotéléphonique mobile et un sous-système d'acheminement, appelé souvent réseau fixe, dans un réseau de radiotéléphonie cellulaire numérique. Plus particulièrement, l'invention améliore l'authentification à travers l'interface radio entre une carte ou module à microprocesseur, dite carte à puce SIM (Subscriber Identify Module), amovible du terminal, et un centre d'authentification du réseau de radiotéléphonie.

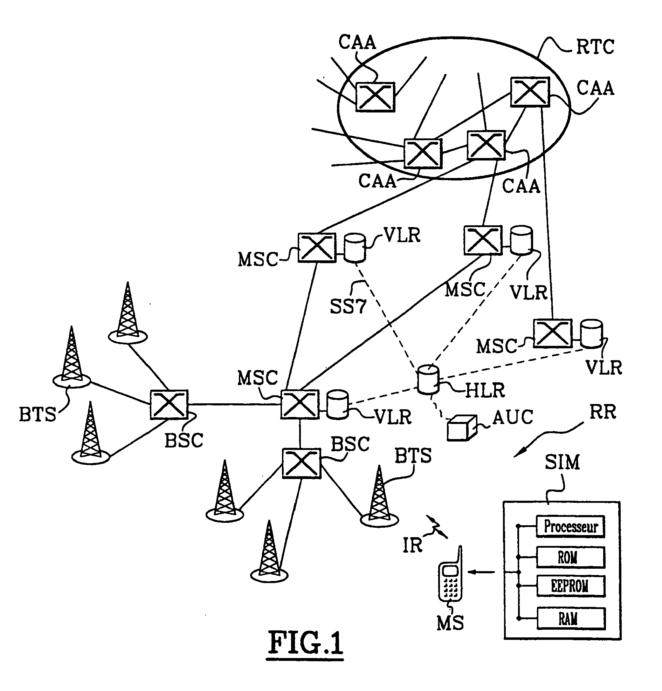

Un réseau de radiotéléphonie cellulaire numérique RR de type GSM, auquel référence sera faite dans la suite à titre d'exemple, comprend principalement plusieurs terminaux radiotéléphoniques mobiles MS et un réseau fixe proprement dit où circule notamment des messages de signalisation, de contrôle, de données et de voix comme montré schématiquement à la figure 1.

Dans le réseau RR montré à la figure 1 sont représentées notamment des entités principales à travers lesquelles des données destinées à la carte SIM d'un terminal mobile MS situé dans une zone de localisation à un instant transitent. Ces entités sont un commutateur du service mobile MSC relié à au moins un commutateur téléphonique à autonomie d'acheminement CAA du réseau téléphonique commuté RTC et gérant des communications pour des terminaux mobiles visiteurs, parmi lesquels le terminal MS, qui se trouvent à un instant donné dans la zone de localisation respective desservie par le commutateur MSC. Un enregistreur de localisation des visiteurs VLR est relié au commutateur MSC et contient des caractéristiques, telles qu'identité et profil d'abonnement des terminaux mobiles, en fait des cartes SIM dans ceux-ci, situés dans la zone de localisation. Un contrôleur de station de base BSC relié au commutateur MSC gère notamment l'allocation de canaux à des terminaux mobiles, la puissance de station(s) de base et des transferts intercellulaires de terminaux mobiles. Une station de base BTS reliée au contrôleur BSC couvre la cellule radioélectrique où le terminal MS se trouve à l'instant donné.

Le réseau de radiotéléphonie RR comprend encore un enregistreur de localisation nominal HLR coopérant avec un centre d'authentification AUC et relié aux commutateurs du service mobile à travers le réseau de signalisation du réseau de radiotéléphonie RR.

L'enregistreur HLR est essentiellement une base de données, comme un enregistreur VLR, qui contient pour chaque terminal MS l'identité internationale IMSI (International Mobile Subscriber Identity) de la carte SIM du terminal, c'est-à-dire de l'abonné possesseur de la carte SIM, le numéro d'annuaire et le profil d'abonnement de l'abonné, et le numéro de l'enregistreur VLR auquel est rattaché le terminal mobile et mis à jour lors de transferts entre zones de localisation.

Le centre d'authentification AUC assure l'authentification des abonnés et participe à la confidentialité des données transitant dans l'interface radio IR entre le terminal MS et la station de base BTS auquel il est rattaché à l'instant donné. I1 gère un algorithme d'authentification A3 et un algorithme A8 de détermination de clé du chiffrement, parfois fusionnés en un seul algorithme A38, selon la norme GSM, qui sont redondants dans la carte SIM du terminal mobile MS, préalablement à toute communication avec le terminal, ou bien lors de la mise en fonctionnement du terminal ou lors d'un transfert intercellulaire. En particulier, le centre d'authentification AUC mémorise une clé d'authentification Ki attribuée uniquement à l'abonné en correspondance avec l'identité IMSI de l'abonné mémorisée dans l'enregistreur de localisation nominal HLR lors de la souscription d'abonnement par l'abonné.

Il est très important d'authentifier le terminal radiotéléphonique mobile MS pour, entre autre, pouvoir reconnaître l'abonné. Afin d'assurer une flexibilité maximale, le centre d'authentification n'authentifie pas le terminal mobile MS lui-même mais la carte à puce SIM qu'il contient. Cette carte contient la clé Ki attribuée à l'abonné et prouve au moyen de l'algorithme d'authentification A3 qu'elle connaît la clé sans la révéler. Le réseau fixe envoie un nombre aléatoire RAND (challenge) à la carte et demande à la carte d'entrer le nombre aléatoire et la clé dans l'algorithme d'authentification pour un calcul cryptographique et de lui retourner le résultat sous la forme d'une réponse signée SRES (Signed RESponse) pour la norme GSM. Il est très difficile à un "attaquant", une tierce personne malveillante souhaitant établir des communications radiotéléphoniques débitées sur le compte du propriétaire de la carte SIM, de prévoir la valeur du nombre aléatoire. Sans la connaissance de la clé, l'attaquant ne peut pas forger une réponse. La taille du nombre aléatoire empêche l'attaquant de garder en mémoire toutes les valeurs du couple nombre aléatoire-réponse signée dans un dictionnaire. La procédure d'authentification dans le réseau de radiotéléphonie authentifie ainsi la carte SIM contenant une clé.

La procédure d'authentification comprend brièvement les étapes suivantes :
- préalablement, le centre d'authentification AUC choisit plusieurs nombres aléatoires RAND et détermine d'une part plusieurs réponses de signature respectivement en fonction des nombres choisis RAND et de la clé Ki attribuée à l'abonné appliqués à l'algorithme d'authentification A3, et d'autre part plusieurs clés de chiffrement respectivement en fonction des nombres choisis RAND et de la clé Ki appliqués à l'algorithme de détermination de clé A8, afin de fournir des triplets [nombre aléatoire, réponse de signature, clé de chiffrement] à l'enregistreur de localisation HLR, dès la souscription d'abonnement au service de radiotéléphonie mobile, puis chaque fois que l'enregistreur HLR a épuisé sa réserve de triplets, en correspondance avec l'identité IMSI de la carte SIM de l'abonné ;
- chaque fois que l'enregistreur de localisation des visiteurs VLR auquel est rattachée momentanément la carte SIM demande une authentification de la carte, l'enregistreur HLR choisit et fournit au moins un triplet à l'enregistreur VLR afin de transmettre le nombre aléatoire du triplet choisi à la carte SIM à travers le réseau fixe et le terminal mobile MS ;
- la carte SIM effectue un calcul cryptographique en appliquant le nombre aléatoire transmis et la clé Ki à l'algorithme d'authentification A3 produisant la réponse signée SRES et la retourne à l'enregistreur VLR ;
- l'enregistreur VLR compare la réponse signée SRES à celle contenue dans le triplet choisi, et en cas d'égalité des réponses, la carte est authentifiée.

Si cette procédure d'authentification permet au réseau fixe d'authentifier la carte, elle ne permet pas en revanche à la carte SIM d'authentifier le réseau fixe. Aucune authentification mutuelle n'est prévue.

A cet inconvénient s'ajoute un autre consistant à pouvoir choisir des nombres quelconques à envoyer à la carte SIM en nombre illimité.

Ces deux inconvénients rendent la carte SIM vulnérable aux attaques par des canaux auxiliaires telles qu'attaques en courant ou par des moyens logiques par exemple relevant de la cryptanalyse.

Dans le domaine de la cryptographie, il est connu notamment du document EP-A-0 506 637 divers types d'attaques récupérant la valeur d'une clé servant à un calcul cryptographique.

La première et la plus simple des attaques consiste à récupérer un nombre aléatoire et le résultat de l'algorithme d'authentification effectué avec ce nombre et à entrer toutes les clés possibles et le nombre aléatoire dans l'algorithme jusqu'à obtenir le résultat récupéré. Dans le cas de l'authentification dans un réseau GSM, cette attaque, appelée force brute, nécessite 2¹²⁷, c'est-à-dire un nombre composé d'un 1 suivi de 38 zéros, chiffrements en moyenne pour obtenir la clé. Bien que cette attaque n'utilise pas la carte, les calculs pouvant être faits dans un micro-ordinateur, le temps qu'elle prendrait est beaucoup trop grand : avec une machine de calcul effectuant 10000 calculs par seconde, cette attaque prendrait 5.10²⁶ années.

Des attaques d'un second type utilisent des failles dans la conception d'un algorithme cryptographique. Pour ces attaques, il est bien souvent nécessaire d'entrer des messages choisis dans l'algorithme et d'analyser les réponses. Une telle attaque a été rapportée sur un algorithme, appelé COMP128, utilisé en tant qu'algorithme d'authentification et de détermination de clé de chiffrement A3A8 selon la norme GSM. Elle nécessite en moyenne de choisir 160000 nombres aléatoires et de récupérer les résultats correspondants. Dans le contexte GSM actuel, cette attaque est réalisable puisqu'il suffit de récupérer une carte SIM qui effectuera le calcul cryptographique sur n'importe quel nombre aléatoire, et ce autant de fois que l'attaquant le voudra.

Enfin, un troisième type d'attaque utilise des "canaux auxiliaires" (side channels). Ces canaux auxiliaires véhiculent de l'information sur les données secrètes et sont généralement des grandeurs physiques de l'implémentation de la fonction cryptographique. Un exemple typique de canal auxiliaire est la consommation d'énergie de la carte à puce. Une attaque utilisant ce canal est l'analyse DPA (Differential Power Analysis) et requiert actuellement quelques milliers d'exécution de l'algorithme cryptographique avec des nombres aléatoires connus mais qui n'ont pas besoin d'être choisis. Cette attaque est tout à fait réalisable dès qu'un attaquant est en possession d'une carte SIM.

L'invention vise à remédier aux inconvénients de la procédure d'authentification commentée ci-dessus et particulièrement à rendre les deux derniers types d'attaque considérablement plus difficiles, sans modifier le matériel du réseau de radiotéléphonie et avec quelques modifications de logiciel en relation essentiellement avec l'authentification.

A cette fin, un procédé d'authentification entre une première entité et une deuxième entité dans un réseau de télécommunication, comprenant des étapes d'appliquer des premières clés mémorisées respectivement dans les première et deuxième entités et un nombre aléatoire produit par la deuxième entité et transmis par la deuxième entité à la première entité respectivement à des premiers algorithmes identiques mémorisés dans les première et deuxième entités, et comparer dans la deuxième entité une réponse produite par le premier algorithme mémorisé dans la première entité et transmise à la deuxième entité et un résultat de réponse produit par le premier algorithme mémorisé dans la deuxième entité, est caractérisé par les étapes préalables d'appliquer des deuxièmes clés mémorisées respectivement dans les première et deuxième entités et le nombre aléatoire respectivement produit par la deuxième entité et transmis par la deuxième entité à la première entité à des deuxièmes algorithmes mémorisés dans la deuxième entité et la première entité, et comparer dans la première entité une signature produite par le deuxième algorithme dans la deuxième entité et transmise avec le nombre aléatoire à la première entité et un résultat de signature produite par le deuxième algorithme dans la première entité, la première clé et le nombre aléatoire n'étant appliqués au premier algorithme dans la première entité que lorsque la signature transmise et le résultat de signature sont identiques.

Selon une réalisation préférée, les première et deuxième entités sont respectivement un terminal radiotéléphonique et un réseau fixe dans un réseau de radiotéléphonie. Les étapes d'appliquer aux deuxièmes algorithmes et de comparer la signature et le résultat de signature constitue une authentification du réseau fixe par le terminal préalablement à l'authentification du terminal par le réseau fixe comprenant les étapes d'appliquer au premier algorithme et de comparer la réponse et le résultat de réponse. Ainsi, le procédé de l'invention ajoute une authentification et la combine à l'authentification du terminal en n'autorisant l'exécution de celle-ci que lorsque le réseau fixe est authentifié par le terminal, ce qui permet au terminal d'être beaucoup moins vulnérable aux deux derniers types d'attaque précités.

Le nombre aléatoire est utilisé pour authentifier d'abord le réseau, et non le terminal, dans le terminal. Puis le nombre aléatoire est utilisé pour authentifier le terminal par le réseau. Pour cette deuxième authentification, il est préférable que la signature soit appliquée avec le nombre aléatoire produit au premier algorithme dans la deuxième entité, et la signature transmise avec le nombre aléatoire soit appliquée au premier algorithme dans la première entité. Le nombre aléatoire et la signature peuvent avoir respectivement Q bits et (P-Q) bits, P étant un entier constant.

L'invention rend les attaques précédemment décrites très difficiles, voire virtuellement impossible. L'attaquant doit espionner la carte SIM activée sur le réseau pour récupérer des nombres aléatoires valides et collecter un nombre suffisant de nombres aléatoires afin de pouvoir lancer une attaque.

Ceci est loin d'être facile : l'attaquant ne peut pas être maître de la fréquence des authentifications dans le réseau de radiotéléphonie. Sachant que le nombre d'authentifications de la carte SIM dans le réseau GSM est variable et dépend des réseaux, cela peut prendre un temps non négligeable.

Un premier avantage de l'invention consiste en la succession des deux authentifications qui ne permet pas de valider un nombre aléatoire à récupérer pour une carte avant qu'elle ne soit activée et reconnue par le réseau. Ceci empêche les attaques dans les points de vente où dans l'état de l'art actuel, un vendeur peut attaquer les cartes qui sont dans son stock et fabriquer des clones avant de les utiliser lorsque la carte est activée, c'est-à-dire vendue.

L'invention rend impossible la majeure partie des attaques de cryptanalyse et en particulier celles à nombre aléatoire choisi. En effet, pour que la carte effectue un calcul cryptographique, on ne peut utiliser que des nombre aléatoires certifiés, qui n'ont probablement pas le format dont l'attaquant a besoin.

L'invention rend les attaques utilisant des canaux auxiliaires particulièrement difficiles à réaliser, puisqu'il faut un matériel important et beaucoup de temps pour récupérer des nombres aléatoires valides. Le coût de l'attaque tant en coût qu'en temps la rend beaucoup moins rentable et est propre à décourager de nombreux pirates.

L'invention améliore ainsi considérablement la sécurité de l'authentification dans les réseaux de radiotéléphonie. Elle n'implique qu'une modification du logiciel des cartes SIM, les premières entités, et des enregistreurs nominaux et centres d'authentification, compris dans les deuxièmes entités, sans avoir aucun impact sur l'infrastructure du réseau. Ces modifications peuvent être effectuées de manière graduelle sans bouleversement du réseau fixe.

Le procédé peut comprendre des étapes d'incrémenter une variable et déconnecter les entités chaque fois que la signature transmise et le résultat de signature sont différents dans la première entité telle que le terminal, et tant que la variable est inférieure à un nombre prédéterminé de préférence programmable, et de refuser d'établir tout accès à la deuxième entité, tel que le moyen fixe, par la première entité dès que la variable est au moins égale à un nombre prédéterminé. L'étape de refuser d'établir tout accès peut être concomitante à autoriser une utilisation de la première entité seulement en interne, ou à interdire tout utilisation de la première entité.

Particulièrement dans le cadre d'un réseau de radiotéléphonie, un moyen d'authentification et d'enregistrement d'identité de terminal dans le réseau fixe détermine plusieurs triplets comprenant chacun un nombre aléatoire et une signature et un résultat de réponse correspondant au nombre aléatoire, avant l'étape d'appliquer les deuxièmes clés dans le terminal. Avant les authentifications, c'est-à-dire préalablement aux étapes d'appliquer, une clé de chiffrement est déterminée en fonction du nombre aléatoire, de la signature et au moins de l'une des première et deuxième clés dans le réseau fixe, lequel inclut le centre d'authentification. A la suite des authentifications est prévue une étape de ne déterminer une clé de chiffrement en fonction du nombre aléatoire, de la signature et au moins de l'une des première et deuxième clés dans le terminal que lorsque la réponse et le résultat de réponse comparés sont identiques.

Selon d'autres variantes augmentant encore la sécurité des données échangées entre les première et deuxième entités, la deuxième clé dans la deuxième entité est une deuxième clé secrète, et la deuxième clé dans la première entité est une clé publique différente de la deuxième clé secrète. D'une manière analogue, la première clé dans la première entité est une première clé secrète, et la première clé dans la deuxième entité est une clé publique différente de la première clé secrète.

L'invention concerne également un module d'identité, tel qu'une carte d'identité d'abonné, dans une première entité, tel qu'un terminal radiophonique mobile, qui est **caractérisé en ce qu**'il comprend des moyens pour mémoriser au moins le deuxième algorithme et au moins la deuxième clé, et des moyens pour exécuter au moins les étapes d'appliquer au deuxième algorithme et de comparer la signature et le résultat de signature conformément à l'invention.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un réseau de radiotéléphonie cellulaire numérique ; et
- la figure 2 montre des étapes d'un procédé d'authentification conforme à l'invention.

Le procédé de l'invention est décrit ci-après dans le cadre du réseau de radiotéléphonie RR de type GSM, déjà présenté en référence à la figure 1, qui ne subit que des modifications et adjonctions de logiciel essentiellement dans le centre d'authentification AUC, ainsi que dans les cartes SIM des terminaux mobiles.

Dans la description ci-après, un réseau fixe est considéré comme la chaîne d'entités rattachées au terminal radiotéléphonique mobile considéré MS depuis l'interface radio IR, comprenant la station de base BTS, le contrôleur de station BTS, le commutateur MSC avec l'enregistreur de localisation des visiteurs VLR, et le couple HLR-AUC.

Il est rappelé qu'un terminal radiotéléphonique mobile MS d'un abonné comprend un module à microprocesseur amovible, dite carte à puce SIM reliée à un bus du circuit numérique à microprocesseur dans le terminal, le bus desservant le clavier, l'écran et des prises de périphérique du terminal mobile. Comme montré à la figure 1, la carte à puce SIM contient principalement un microprocesseur, une mémoire ROM incluant le système d'exploitation de la carte et des algorithmes d'application spécifiques, une mémoire non volatile EEPROM qui contient toutes les caractéristiques liées à l'abonné telles que l'identité IMSI, le profil d'abonnement, la liste de numéros d'appelés avec leurs noms, des données de sécurité tels que clé et code confidentiel, etc., et une mémoire RAM servant au traitement des données à recevoir du et à transmettre vers le circuit numérique du terminal. En particulier, les algorithmes d'authentification et de détermination de clé de chiffrement et les clés et autres paramètres liés à ces algorithmes sont gérés et écrits dans les mémoires ROM et EEPROM.

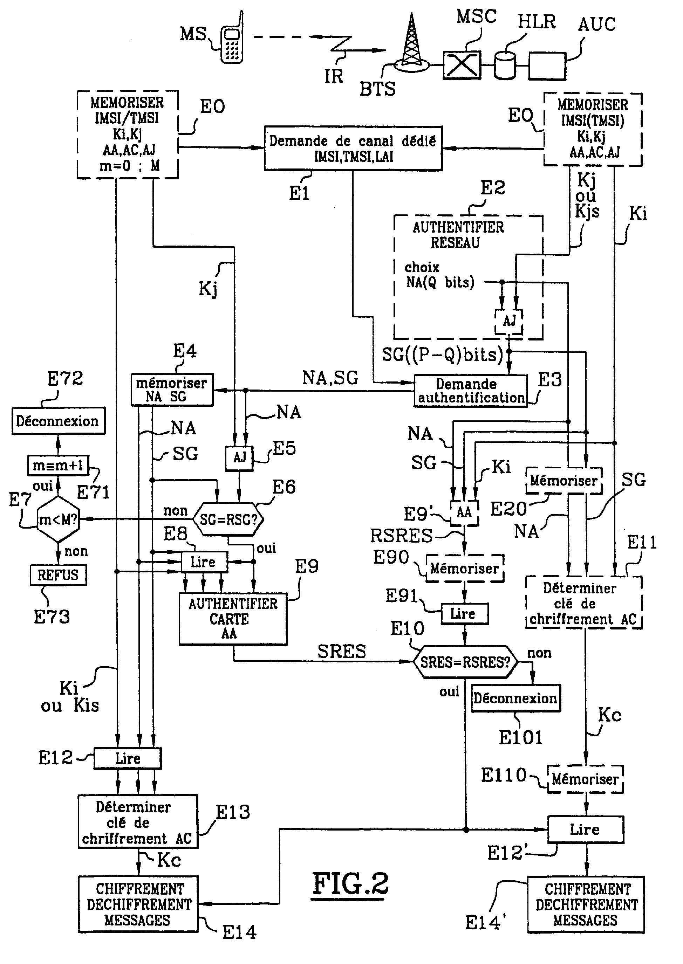

En référence à la figure 2, le procédé d'authentification selon l'invention succède à une mise en communication de la carte SIM du terminal radiotéléphonique MS avec le sous-réseau BTS, BSC, MSC et VLR inclus dans le réseau de radiotéléphonie RR et rattaché temporairement au terminal radiotéléphonique MS, et précède une détermination de clé de chiffrement.

Le procédé montré à la figure 2 comprend essentiellement des étapes de E0 à E14. Dans la figure 2, les blocs en traits pointillés sont relatifs à des étapes E0, E2, E9', E90, E20, E11 et E110, qui sont effectuées essentiellement dans le réseau fixe, indépendamment de toute demande d'authentification, et au moins préalablement à la demande de l'authentification considérée à l'étape E3 selon la réalisation illustrée.

Initialement, à une étape E0, le terminal mobile est considéré avoir mémorisé dans les mémoires ROM et EEPROM de sa carte SIM, l'identité IMSI de celle-ci, c'est-à-dire l'identité de l'abonné possesseur de la carte SIM, le cas échéant l'identité temporaire TMSI de la carte attribuée par le commutateur de rattachement MSC, une première clé d'authentification Ki avec un premier algorithme d'authentification AA pour authentifier le terminal par le réseau, un algorithme de détermination de clé de chiffrement AC, un algorithme de chiffrement/déchiffrement, et selon l'invention une deuxième clé Kj avec un deuxième algorithme d'authentification AJ pour authentifier le réseau par la carte SIM, ainsi qu'une variable entière m initialement égale à 0 et une borne entière supérieure M de celle-ci. Ces données initiales, à l'exception des entiers m et M, et algorithmes sont également mémorisés à l'étape initiale E0 dans le réseau fixe. Les clés Ki et Kj pour chaque abonné sont mémorisées dans le centre d'authentification AUC en correspondance avec l'identité d'abonné IMSI, l'identité temporaire n'étant attribuée que par l'enregistreur de localisation des visiteurs VLR relié au commutateur du service mobile MSC auquel est rattaché le terminal mobile MS. Les deux algorithmes d'authentification AA et AJ et l'algorithme de détermination de clé de chiffrement AC sont mémorisés dans le centre d'authentification AUC, et l'algorithme de chiffrement/déchiffrement est installé dans la station de base BTS. Comme on le verra dans la suite, le centre d'authentification AUC fournit des triplets [(NA, SG), RSRES, Kc] à l'enregistreur de localisation nominal HLR.

Lors d'une demande d'accès au service mobile par le terminal, par exemple après la mise en fonctionnement du terminal mobile MS, ou pour une mise à jour de la localisation du terminal, ou préalablement à une communication téléphonique, ou périodiquement pour authentifier la carte SIM à la demande de l'enregistreur VLR, le terminal MS échange des signaux avec le sous-réseau de rattachement de manière à dédier au terminal MS un canal de communication et à déclarer par le terminal MS au sous-réseau l'identité de terminal en transmettant l'identité IMSI de la carte SIM du terminal à l'enregistreur de localisation des visiteurs VLR, ou le cas échéant l'identité temporaire TMSI avec l'identité de la zone de localisation LAI relatives à la dernière communication établie. Ces échanges pour dédier un canal au terminal MS sont illustrés d'une manière simplifiée par l'étape E1 dans la figure 2.

Les étapes suivantes E2 à E8 concernent l'authentification du réseau par la carte SIM qui est ajoutée par l'invention et qui est implantée essentiellement pour partie dans le centre d'authentification AUC et les enregistreurs HLR et VLR et pour partie dans les mémoires ROM et EEPROM de la carte SIM.

Préalablement, dans le centre AUC, un générateur pseudo-aléatoire fournit plusieurs nombres aléatoires NA à Q bits. La clé Kj différente de la clé Ki et mémorisée dans le centre AUC et chaque nombre aléatoire NA à Q bits sont appliqués en entrée de l'algorithme d'authentification de réseau AJ dans le centre AUC à l'étape E2. En variante, les clés Kj et Ki peuvent être identiques. L'algorithme AJ est par exemple du type DES (Data Encryption Standard) et produit des signatures de nombre aléatoire SG à (P-Q) bits. Les nombres aléatoires NA et les signatures correspondantes SG sont écrits dans l'enregistreur HLR en association avec l'identité IMSI de la carte SIM, et au moins un couple [NA, SG] choisi par l'enregistreur HLR est transmis à l'enregistreur VLR auquel est rattaché le terminal à l'étape E20.

Lorsque l'enregistreur de localisation des visiteurs VLR décide de procéder à l'authentification du réseau fixe par la carte SIM selon l'invention, le couple choisi [NA, SG] est introduit successivement dans des messages de demande d'authentification à l'étape E3 transmis respectivement par le commutateur MSC, le contrôleur BSC et enfin la station de base BTS vers le terminal mobile MS à travers l'interface radio IR. L'entier P, avec P>Q, est choisi de manière à ne pas modifier la longueur des messages d'authentification selon la norme en vigueur dans le réseau de radiotéléphonie RR, en l'occurrence la longueur des messages contenant un nombre RAND. L'entier P est typiquement égal à 128, soit une taille du couple [NA, SG] égale à 16 octets. L'entier Q dénotant le nombre de bits dans le nombre aléatoire NA peut être supérieur ou inférieur à P/2 ; toutefois les entiers P et Q peuvent satisfaire l'égalité P/2 = Q.

Dans la carte SIM du terminal mobile MS, le nombre aléatoire NA et la signature SG sont écrits en mémoire RAM de la carte SIM à l'étape E4 en réponse aux messages de demande d'authentification transmis par la station de base de rattachement BTS. Immédiatement, à l'étape suivante E5, le nombre aléatoire NA et la clé Kj sont appliqués à l'algorithme AJ contenu dans les mémoires ROM et EEPROM de la carte SIM, d'une manière analogue au déroulement de l'algorithme AJ à l'étape E2 dans le centre d'authentification AUC. Le résultat RSG produit par l'algorithme AJ est comparé à la signature SG transmise par le centre d'authentification AUC et lue à l'étape E6.

Si à l'étape E6, RSG est différent de SG, la variable m est comparée à l'entier prédéterminé M, typiquement égal à 10 environ, à l'étape E7. Tant que m<M, la variable m est incrémentée d'une unité dans un compteur et la carte SIM n'effectue pas l'étape suivante E9 de production de réponse de signature SRES chaque fois que SG est différent de RSG suite à un message de demande d'authentification, et par conséquent le canal de signalisation dédié est libéré afin que l'accès demandé au service mobile par le terminal ne soit pas établi en libérant les ressources radio, comme indiqué aux étapes E71 et E72. Le compteur est contenu dans la carte SIM, et l'entier M est programmable afin que l'opérateur fournissant la carte SIM puisse sélectionner l'entier M.

Lorsque la variable m atteint la borne supérieure M à l'étape E7, l'accès au service mobile n'est naturellement pas établi comme précédemment, mais également toute nouvelle authentification est systématiquement refusée, comme indiqué à l'étape E73. Ceci signifie que la carte SIM est probablement en cours "d'attaque" par un tiers malintentionné pour une utilisation frauduleuse du compte d'abonné attribué par le réseau à la carte SIM. Dans ce cas deux variantes sont préconisées par l'invention.

Selon une première variante, la carte SIM autorise l'abonné à utiliser le terminal radiotéléphonique MS uniquement pour des commandes locales internes au terminal. Par exemple les commandes locales servent à consulter le répertoire des numéros d'appel via le clavier ou le moyen de reconnaissance vocale du terminal, sans autoriser l'établissement d'une quelconque communication téléphonique.

Selon une deuxième variante, la carte SIM bloque toute action de l'abonné par l'intermédiaire du clavier, et/ou du moyen de reconnaissance vocale, et met hors service le terminal, c'est-à-dire la carte SIM devient "muette" ; la carte SIM n'accepte plus aucune commande et le terminal MS est inutilisable.

En retournant à l'étape E6, lorsque le résultat RSG est égale à la signature SG, le nombre aléatoire NA et la signature SG reçus et la clé d'authentification Ki sont lus à l'étape E8 afin de les appliquer à l'algorithme d'authentification connu AA à l'étape E9. A ce stade, l'authentification se poursuit sensiblement comme dans une carte SIM connue. L'algorithme AA fournit une réponse signée SRES (Signed RESponse) qui est incluse dans un message transmis à la station de base de rattachement BTS, laquelle la retransmet à l'enregistreur VLR à travers la station de base BTS, le contrôleur BCS et le commutateur MSC.

Au préalable, avant la demande d'authentification E3 et donc avant la réalisation des étapes E3 à E9 dans la carte SIM, les enregistreurs VLR et HLR ont mémorisé pour l'abonné le nombre NA et la signature SG, et le centre d'authentification AUC a appliqué, après l'étape E20, et pour chacun desdits nombres aléatoires NA, le nombre aléatoire NA, la signature correspondante SG et la première clé Ki à l'algorithme AA à une étape E9'. L'algorithme AA produit un résultat de réponse signée RSRES pour chaque couple (NA, SG). Concomitamment avec l'étape E20, les résultats RSRES sont écrits dans l'enregistreur HLR à une étape E90 et le couple (NA, SG) choisi par l'enregistreur est transmis avec le résultat correspondant RSRES à l'enregistreur VLR qui les a mémorisé.

A réception de la réponse signée SRES transmise par le terminal mobile MS après l'étape E9, l'enregistreur VLR lit le résultat de réponse signée RSRES à l'étape E91 et le compare à la réponse reçue SRES à l'étape E10. Si ces deux variables ne sont pas identiques, l'enregistreur VLR commande au commutateur de rattachement MSC de déconnecter le terminal et le réseau fixe à l'étape E101, empêchant le terminal de poursuivre sa demande d'accès au service mobile.

Dans le cas contraire, le centre d'authentification AUC valide l'authentification de la carte SIM à l'étape E10, qui a succédé à l'authentification (étape E5) du réseau RR par la carte SIM selon l'invention, pour autoriser le chiffrement et le déchiffrement des messages échangés ultérieurement entre le terminal mobile MS et le sous-réseau BTS-BSC-MSC.

Au préalable, le centre d'authentification AUC a appliqué les couples (NA, SG) correspondant auxdits plusieurs nombres aléatoires NC et la clé à l'algorithme de détermination de clé de chiffrement AC à une étape E11 afin de produire des clés de chiffrement Kc, qui sont mémorisées dans l'enregistreur VLR à une étape E110 concomitante aux étapes E20 et E90. Ainsi, plusieurs triplets [(NA, SG), RSRES, Kc] sont mémorisés préalablement dans l'enregistreur de localisation nominal HRL, et au moins l'un d'eux choisi est écrit dans l'enregistreur VLR en association avec l'identité IMSI/TMSI de la carte SIM.

A la suite de l'étape E10, le commutateur MSC décide de passer en mode chiffré en transmettant un message d'autorisation de chiffrement avec la clé Kc, relayé par les entités BSC et BTS, vers le terminal mobile MS, la clé Kc étant prélevée par la station de base BTS.

Par ailleurs, à la suite de l'exécution de l'étape d'authentification E9, la carte SIM lit à l'étape E12 le nombre aléatoire NA et SG et également la clé d'authentification Ki afin de les appliquer à l'algorithme de chiffrement AC pour déterminer une clé de chiffrement Kc à l'étape E13.

Finalement à des étapes E14 et E14', le terminal MS et le sous-réseau de rattachement, particulièrement la station de base de rattachement BTS qui contient un algorithme de chiffrement et déchiffrement identique à celui contenu dans la carte SIM et qui a mémorisé la clé déterminée Kc, peuvent échanger des messages chiffrés et déchiffrés avec la clé Kc.

En variantes, les deuxièmes clés Kj, ou bien les premières et deuxièmes clés Ki et Kj, sont lues et appliquées respectivement aux algorithmes AC, à la place des premières clés Ki aux étapes E13 et E11.

Selon d'autres variantes, la clé Kj attribuée à la carte SIM dans le centre d'authentification AUC est une clé privée secrète Kjs, et la clé Kj contenue dans la carte SIM est une clé publique différente de la clé Kj et ayant un lien complexe avec la clé secrète Kjs. L'algorithme d'authentification de réseau AJ est asymétrique et permet de vérifier la signature SG par comparaison avec le résultat RSG à l'étape E6, bien que la carte SIM, et donc toute personne malintentionnée, méconnaisse la clé secrète Kjs.

D'une manière analogue, la clé Ki dans la carte SIM est remplacée par une clé secrète Kis, et la clé Ki dans le centre d'authentification AUC est une clé publique, l'algorithme d'authentification de carte AA étant alors asymétrique.

Bien que l'invention ait été décrite selon des réalisations préférées en référence à un réseau de radiotéléphonie entre un terminal radiotéléphonique mobile et le réseau fixe du réseau de radiotéléphonie, le procédé d'authentification de l'invention peut être mis en oeuvre dans un réseau de télécommunication relativement à deux entités quelconques qui ont besoin chacune d'authentifier l'autre, chaque entité pouvant être un ensemble d'entités prédéterminées reliées.

## Revendications

1. Procédé d'authentification entre une première entité (MS) et une deuxième entité (VLR, HLR, AUC) dans un réseau de télécommunication (RR), comprenant des étapes:
- d'appliquer (E9, E9') des premières clés (Ki) mémorisées respectivement dans les première et deuxième entités et un nombre aléatoire (NA) produit par la deuxième entité et transmis par la deuxième entité à la première entité respectivement à des premiers algorithmes identiques (AA) mémorisés dans les première et deuxième entités, et
- comparer (E10) dans la deuxième entité (VLR, HLR, AUC) une réponse (SRES) produite par le premier algorithme mémorisé dans la première entité et transmise à la deuxième entité et un résultat de réponse (RSRES) produit par le premier algorithme mémorisé dans la deuxième entité ;
ledit procédé comportant en outre les étapes préalables :
- d'appliquer (E2, ES) des deuxièmes clés (Kj) mémorisées respectivement dans les première et deuxième entités et le nombre aléatoire (NA) respectivement produit par la deuxième entité et transmis par la deuxième entité à la première entité à des deuxièmes algorithmes (AJ) mémorisés dans la deuxième entité (VLR, HLR, AUC) et la première entité (MS), et
- comparer dans la première entité (MS) une signature (SG) produite par le deuxième algorithme dans la deuxième entité et transmise avec le nombre aléatoire (NA) à la première entité et un résultat de signature (RSG) produite par le deuxième algorithme dans la première entité, la première clé (Ki) et le nombre aléatoire (NA) n'étant appliqués au premier algorithme (AA) dans la première entité (MS) que lorsque la signature transmise (SG) et le résultat de signature (RSG) sont identiques ;
**ledit procédé étant caractérisé en ce qu'il** comporte en outre des étapes :
- d'incrémenter (E71) une variable (m) et déconnecter (E72) les entités chaque fois que la signature transmise (SG) et le résultat de signature (RSG) sont différents dans la première entité (MS) et tant que la variable est inférieure à un nombre prédéterminé (M) de préférence programmable, et
- de refuser (E73) d'établir tout accès à la deuxième entité (VLR, HLR, AUC) par la première entité dès que la variable (m) est au moins égale à un nombre prédéterminé (M).

2. Procédé conforme à la revendication 1, selon lequel l'étape de refuser d'établir tout accès (E73) est concomitante à autoriser une utilisation de la première entité (MS) seulement en interne.

3. procédé conforme à la revendication 1, selon lequel l'étape de refuser d'établir tout accès (E73) est concomitante à interdire tout utilisation de la première entité (MS).

4. Procédé conforme à l'une quelconque des revendications 1 à 3, selon lequel la signature (SG) est également appliquée (E9') avec le nombre aléatoire produit (NA) au premier algorithme (AA) dans la deuxième, entité (VLR, HLR, AUC), et la signature transmise avec le nombre aléatoire est également appliquée (E9) au premier algorithme (AA) dans la première entité (MS).

5. Procédé conforme à l'une quelconque des revendications 1 à 4, selon lequel le nombre aléatoire (NA) et la signature (SG) ont respectivement Q bits et (P-Q) bits, P étant un entier constant et Q étant inférieur ou égal à P/2.

6. Procédé conforme à l'une quelconque des revendications 1 à 5, selon lequel les première et deuxième entités sont respectivement un terminal radiotéléphonique (MS) et un réseau fixe (VLR, HLR, AUC) dans un réseau de radiotéléphonie (RR).

7. Procédé conforme à la revendication 6, selon lequel un moyen d'authentification et d'enregistrement d'identité de terminal (VLR, HLR, AUC) dans le réseau fixe détermine plusieurs triplets comprenant chacun un nombre aléatoire (NA) et une signature (SG) et un résultat de réponse (RSRES) correspondant au nombre aléatoire, avant l'étape d'appliquer (E5) les deuxièmes clés (Kj) dans le terminal (MS).

8. Procédé conforme à la revendication 6 ou 7, comprenant une étape de déterminer (E11) une clé de chiffrement (Kc) en fonction du nombre aléatoire (NA), de la signature (SG) et au moins de l'une des première et deuxième clés (Ki, Kj) dans le réseau fixe (VLR, HLR, AUC) préalablement aux étapes d'appliquer (E2, E5, E9, E9').

9. Procédé conforme à l'une quelconque des revendications 6 à 8, comprenant une étape de ne déterminer (E13) une clé de chiffrement (Kc) en fonction du nombre aléatoire (NA), de la signature (SG) et au moins de l'une des première et deuxième clés (Ki, Kj) dans le terminal (MS) que lorsque la réponse (SRES) et le résultat de réponse (RSRES) comparés sont identiques.

10. Procédé conforme à l'une quelconque des revendications 1 à 9, selon lequel la deuxième clé dans la deuxième entité (VLR, HLR, AUC) est une deuxième clé secrète (Kjs), et la deuxième clé dans la première entité (MS) est une clé publique (Kj) différente de la deuxième clé secrète.

11. Procédé conforme à l'une quelconque des revendications 1 à 10, selon lequel la première clé dans la première entité (MS) est une première clé secrète (Kis), et la première clé dans la deuxième entité (VLR, MCR, AUC) est une clé publique (Ki) différente de la première clé secrète.

12. Module d'identité (SIM) dans une première entité (MS) comprenant des moyens (ROM, EEPROM) pour mémoriser au moins le deuxième algorithme (AJ) et au moins la deuxième clé (Kj), des moyens (ROM, EEPROM, RAM) pour exécuter au moins les étapes d'appliquer (E5) au deuxième algorithme (AA) et de comparer (E6) la signature (SG) et le résultat de signature (RSG) **caractérisé en ce qu'**il comporte en outre un moyen compteur et des moyens pour refuser (E73) d'établir tout accès à la deuxième entité (VLR, HLR, AUC) par la première entité dès que la valeur (m) dudit moyen compteur est au moins égale à un nombre prédéterminé (M) conformément à l'une quelconque des revendications 1 à 11.

## Claims

1. A method of authentication between a first entity (MS) and a second entity (VLR, HLR, AUC) in a telecommunication network (RR) including the following steps:
- applying (E9, E9') first keys (Ki) respectively stored in the first and second entities and a random number (NA) produced by the second entity and transmitted by the second entity to the first entity respectively to first identical algorithms (AA) stored in the first and second entities, and
- comparing (E10), in the second entity (VLR, HLR, AUC), an answer (SRES) produced by the first algorithm stored in the first entity and transmitted to the second entity and the result of an answer (RSRES) produced by the first algorithm stored in the second entity;
said method further comprising prior following steps:
- applying (E2, ES) second keys (Kj) respectively stored in the first and second entities and the random number (NA) respectively produced by the second entity and transmitted by the second entity to a first entity to second algorithms (AJ) stored in the second entity (VLR, HLR, AUC) and the first entity (MS), and
- comparing, in the first entity (MS), a signature (SG) produced by the second algorithm in a second entity and transmitted together with the random number (NA) to the first entity, and the result of a signature (RSG) produced by the second algorithm in the first entity, the first key (Ki) and the random number (NA) being applied to the first algorithm (AA) in the first entity (MS) only when the signature transmitted (SG) and the result of the signature (RSG) are identical;
the method being **characterised in that** it further includes the following steps:
- incrementing (E71) a variable (m) and disconnecting (E72) the entities each time the transmitted signature (SG) and the result of the signature (RSG) are different in the first entity (MS) and so long as the variable is smaller than the preferably programmable predetermined number (M), and
- refusing (E73) to provide the second entity (VLR, HLR, AUC) an access to the first entity as soon as the variable (m) is at least equal to a predetermined number (M).

2. A method according to claim 1, wherein the step of refusing to provide any access (E73) is concurrent with authorizing the utilization of the first entity (MS) only on an internal basis.

3. A method according to claim 1, wherein the step of refusing to provide any access (E73) is concurrent with prohibiting any utilization of the first entity (MS).

4. A method according to any one of claims 1 to 3, wherein the signature (SG) is also applied (E9') with the random number produced (NA) at the first algorithm (AA) in the second entity (VLR, HLR, AUC) and the signature transmitted with the random number is also applied (E9) to the first algorithm (AA) in the first entity (MS).

5. A method according to any one of claims 1 to 4, wherein the random number (NA) and the signature (SG) respectively have Q bits and (P-Q) bits, P being a constant integer and Q being smaller than or equal to P/2.

6. A method according to any one of claims 1 to 5, wherein the first and second entities are respectively a radiotelephonic terminal (MS) and a fixed network (VLR, HLR, AUC) in a radiotelephony network (RR).

7. A method according to claim 6, wherein means for authenticating and saving a terminal identity (VLR, HLR, AUC) in the fixed network determine several triplets, each including a random number (NA) and a signature (SG) and the result of an answer (RSRES) corresponding to the random number, prior to the step of application (E5) of the second keys (kj) into the terminal (MS).

8. A method according to claims 6 or 7, including a step of determining (E11) an enciphering key (Kc) as a function of a random number (NA), the signature (SG) and at least one of the first and second keys (Ki, Kj) in the fixed network (VLR, HLR, AUC) prior to the step of applying (E2, E5, E9, E9').

9. A method according to anyone of claims 6 to 8, including a step of determining (E13) an enciphering key (Kc), as a function of the random number (NA), the signature (SG) and at least one of the first and second keys (Ki, Kj) in the terminal (MS) only when the answer (SRES) and the result of the answer (RSRES) are compared and identical to each other.

10. A method according to anyone of claims 1 to 9, wherein the second key in the second entity (VLR, HLR, AUC) is a secret second key (Kjs) and the second key in the first entity (MS) is a public key (Kj) different from the secret second key.

11. A method according to any one of claims 1 to 10, wherein the first key in the first entity (MS) is a first secret key (Kis), and the first key in the second entity (VLR, MCR, AUC) is a public key (Ki) different from the first secret key.

12. An identity module (SIM) in a first entity (MS) including means (ROM, EEPROM) for storing at least the second algorithm (AJ) and at least the second key (Kj), means (ROM, EEPROM, RAM) for executing at least the steps of applying (E5) to the second algorithm (AA) and comparing (E6) the signature (SG) and the result of the signature (RSG) **characterised in that** it further includes a counter means and means for refusing (E73) to provide the second entity (VLR, HLR, AUC) any access to the first entity so long as the value (m) of said counter means is at least equal to a predetermined number (M) in compliance with any one of claims 1 to 11.

## Patentansprüche

1. Verfahren zur Authentisierung zwischen einer ersten Einheit (MS) und einer zweiten Einheit (VLR, HLR, AUC) in einem Telekommunikationsnetz (RR), das folgende Schritte umfaßt:
- Anwenden (E9, E9') der ersten Schlüssel (Ki), die in der ersten beziehungsweise der zweiten Einheit gespeichert sind, und einer beliebigen Anzahl (NA), die von der zweiten Einheit erzeugt und von der zweiten Einheit an die erste Einheit beziehungsweise an erste identische Algorithmen (AA) übermittelt wird, die in der ersten und der zweiten Einheit gespeichert sind,
- Vergleichen (E10) in der zweiten Einheit (VLR, HLR, AUC) einer Antwort (SRES), die vom ersten Algorithmus erzeugt wird, der in der ersten Einheit gespeichert ist und an die zweite Einheit übermittelt wird, mit einem Antwortergebnis (RSRES), das vom ersten Algorithmus erzeugt wird, der in der zweiten Einheit gespeichert ist;
Wobei das besagte Verfahren ferner die nachstehenden vorherigen Schritte umfaßt:
- Anwenden (E2, ES) der zweiten Schlüssel (Kj), die in der ersten beziehungsweise der zweiten Einheit gespeichert sind, und der beliebigen Anzahl (NA), die von der zweiten Einheit erzeugt und von der zweiten Einheit an die erste Einheit beziehungsweise an zweite identische Algorithmen (AJ) übermittelt wird, die in der zweiten Einheit (VLR, HLR, AUC) und der ersten Einheit (MS) gespeichert sind,
- Vergleichen in der ersten Einheit (MS) einer Signatur (SG), die vom zweiten Algorithmus in der zweiten Einheit erzeugt und mit der beliebigen Anzahl (NA) an die erste Einheit übermittelt wird, mit einem Signaturergebnis (RSG), das vom zweiten Algorithmus in der ersten Einheit erzeugt wird, wobei der erste Schlüssel (Ki) und die beliebige Anzahl (NA) nur dann auf den ersten Algorithmus (AA) in der ersten Einheit (MS) angewandt wird, wenn die übermittelte Signatur (SG) und das Signaturergebnis (RSG) identisch sind;
Wobei dieses Verfahren **dadurch gekennzeichnet ist, daß** es ferner die nachstehenden Schritte umfaßt:
- Hochzählen (E71) einer Variablen (m) und Trennen (E72) der Einheiten jedes Mal, wenn die übermittelte Signatur (SG) und das Signaturergebnis (RSG) in der ersten Einheit (MS) unterschiedlich sind und so lange, wie die Variable geringer als eine vorbestimmte vorzugsweise programmierbare Anzahl (M) ist;
- Ablehnen (E73) jeglichen Zugriff zur zweiten Einheit (VLR, HLR, AUC) durch die e r s te Einheit herzustellen, sobald die Variable (m) mindestens gleich einer vorbestimmten Anzahl (M) ist.

2. Verfahren nach Anspruch 1, **dadurch gekennzeichnet, daß** der Schritt der Ablehnung, jeglichen Zugriff (E73) herzustellen, davon begleitet ist, eine Benutzung der ersten Einheit (MS) nur intern zuzulassen.

3. Verfahren nach Anspruch 1, **dadurch gekennzeichnet, daß** der Schritt der Ablehnung, jeglichen Zugriff (E73) herzustellen, davon begleitet ist, jegliche Benutzung der ersten Einheit (MS) zu untersagen.

4. Verfahren nach einem beliebigen der vorstehenden Ansprüche 1 bis 3, **dadurch gekennzeichnet, daß** die Signatur (SG) ebenfalls mit der beliebigen auf den ersten Algorithmus (AA) in der zweiten Einheit (VLR, HLR, AUC) erzeugten Anzahl (NA) angewandt wird (E9'), und die mit der beliebigen Anzahl übermittelte Signatur wird ebenfalls auf den ersten Algorithmus (AA) in der ersten Einheit (MS) angewandt.

5. Verfahren nach einem beliebigen der vorstehenden Ansprüche 1 bis 4, **dadurch gekennzeichnet, daß** die beliebige Anzahl (NA) und die Signatur (SG) Q Bits beziehungsweise (P-Q) Bits haben, wobei P eine konstante ganze Zahl ist und Q unter oder gleich P/2 beträgt.

6. Verfahren nach einem beliebigen der vorstehenden Ansprüche 1 bis 5, **dadurch gekennzeichnet, daß** die erste und die zweite Einheit ein Funktelefon-Terminal (MS) beziehungsweise ein Festnetz (VLR, HLR, AUC) in einem Funktelefonnetz (RR) ist.

7. Verfahren nach Anspruch 6, **dadurch gekennzeichnet, daß** ein Mittel zur Authentisierung und Aufzeichnung der Identität eines Terminals (VLR, HLR, AUC) im Festnetz mehrere Tripletts bestimmt, die jeweils eine beliebige Anzahl (NA) und eine Signatur (SDG) und ein Antwortergebnis (RSRES) umfassen, das der beliebigen Anzahl entspricht, und dies vor dem Schritt mit der Anwendung (E5) der zweiten Schlüssel (Kj) im Terminal (MS).

8. Verfahren nach Anspruch 6 oder 7, **dadurch gekennzeichnet, daß** es einen Schritt mit Bestimmung (E11) eines Chiffrierschlüssels (Kc) in Abhängigkeit von der beliebigen Anzahl (NA), der Signatur (SG) und mindestens eines des ersten und zweiten Schlüssels (Ki, Kj) im Festnetz (VLR, HLR, AUC) umfaßt, und dies vor den Schritten der Anwendung (E2, E5, E9, E9').

9. Verfahren nach einem beliebigen der vorstehenden Ansprüche 6 bis 8, **dadurch gekennzeichnet, daß** es einen Schritt umfaßt, nur dann einen Chiffrierschlüssel (Kc) in Abhängigkeit von der beliebigen Anzahl (NA), der Signatur (SG) und mindestens eines des ersten und zweiten Schlüssels (Ki, Kj) im Terminal (MS) zu bestimmen (E13), wenn die Antwort (SRES) und das Antwortergebnis (RSRES) bei Vergleich identisch sind.

10. Verfahren nach einem beliebigen der vorstehenden Ansprüche 1 bis 9, **dadurch gekennzeichnet, daß** der zweite Schlüssel in der zweiten Einheit (VLR, HLR, AUC) ein zweiter Geheimschlüssel (Kjs) ist, und der zweite Schlüssel in der ersten Einheit (MS) ein öffentlicher Schlüssel (Kj) ist, der sich vom zweiten Geheimschlüssel unterscheidet.

11. Verfahren nach einem beliebigen der **vorstehenden Ansprüche 1 bis 10, dadurch gekennzeichnet, daß** der erste Schlüssel in der ersten Einheit (MS) ein erster Geheimschlüssel (Kis) ist, und der erste Schlüssel in der zweiten Einheit (VLR, MCR, AUC) ein öffentlicher Schlüssel (Ki) ist, der sich vom ersten Geheimschlüssel unterscheidet.

12. Identitätsmodul (SIM) in einer ersten Einheit (MS), das Mittel (ROM, EEPROM) zum Speichern von mindestens dem zweiten Algorithmus (AJ) und mindestens dem zweiten Schlüssel (Kj), Mittel (ROM, EEPROM, RAM) für die Ausführung mindestens der Etappen mit der Anwendung (E5) auf den zweiten Algorithmus (AA) und dem **Vergleich (E6) der Signatur (SG) mit dem** Signaturergebnis (RSG) umfaßt, **dadurch gekennzeichnet, daß** es ferner ein Zählmittel und Mittel zur Ablehnung (E73) der Herstellung jeglichen Zugriffs auf die zweite Einheit (VLR, HLR, AUC) durch die erste Einheit umfaßt, sobald der Wert (m) des besagten Zählmittels mindestens gleich einer vorbestimmten Anzahl (M) nach einem beliebigen der vorstehenden Ansprüche 1 bis 11 ist.
